# EUROPÄISCHE PATENTSCHRIFT

(11) **EP 2 705 628 B1**
(45) Veröffentlichungstag und Bekanntmachung des Hinweises auf die Patenterteilung: **15.08.2018**
(21) Anmeldenummer: 12710499.0
(22) Anmeldetag: 21.03.2012
(51) Int. Cl.: H04L 5/14, H04L 7/00, H04B 7/185

(54) **VERFAHREN UND VORRICHTUNG ZUR PASSIVEN ANALYSE EINER ZWEIWEGE-KOMMUNIKATION**
METHOD AND APPARATURS FOR PASSIVE ANALYSIS OF BIDIRECTIONAL COMMUNICATIONS
PROCÉDÉ ET DISPOSITIF POUR ANALYSER DES COMMUNICATIONS BIDIRECTIONNELES

(30) Priorität: 04.05.2011 DE 102011100471
(43) Veröffentlichungstag der Anmeldung: 12.03.2014
(73) Patentinhaber: Rheinmetall Defence Electronics GmbH, 28309 Bremen (DE)
(72) Erfinder: SEEGER, Ralf, 28197 Bremen (DE)
(74) Vertreter: Greif, Thomas
(86) Internationale Anmeldenummer: PCT/EP2012/054957
(87) Internationale Veröffentlichungsnummer: WO 2012/150089

(56) Entgegenhaltungen:
- US-A1- 2005 175 123
- US-A1- 2008 019 467
- US-A1- 2009 245 220
- US-A1- 2011 096 684

## Beschreibung

Die vorliegende Erfindung betrifft ein Verfahren und eine Vorrichtung zur passiven Analyse einer Zweiwege-Kommunikation.

Es gibt eine Vielzahl von Kommunikationssystemen, die eine Zweiwege-Kommunikation einer Zentralstation mit mindestens einem Endgerät ermöglichen. Dabei sendet die Zentralstation üblicherweise ihr Signal an alle Endgeräte und koordiniert die Übertragung von den Endgeräten zurück an die Zentralstation. Die Übertragung von der Zentralstation an die Endgeräte wird als Downlink oder Outbound Link bezeichnet, die Übertragung von den Endgeräten an die Zentralstation als Uplink oder Inbound Link. Ein Beispiel für ein solches Kommunikationssystem ist ein Satelliten-Kommunikationssystem wie beispielsweise ein DVB-RCS (Digital Video Broadcast - Return Channel Satellite) -System. Ein weiteres Beispiel ist jedes Mobilfunksystem.

Dokumente US 2011/096684A1, US 2009/245220A1, US 2008/019467A1 und US 2005/175123A1 stellen relevanten Stand der Technik dar, der sich auch mit der Analyse von Zweiwege-Kommunikation befasst.

Oftmals ist es insbesondere im militärischen oder nachrichtendienstlichen Umfeld erwünscht, die Zweiwege-Kommunikation zu analysieren, insbesondere aufzuklären. Dies soll bevorzugt passiv erfolgen, also ohne Informationen an eine Komponente des überwachten Kommunikationssystems zu übertragen. Den Downlink zu analysieren stellt dabei keine Schwierigkeit dar, da das Downlinksignal alle Informationen enthält, die zum Empfang notwendig sind. Anders verhält es sich im Uplink, da die Übertragung von der Zentralstation koordiniert wird. Diese kennt somit das Timing, mit dem ein Endgerät seine Daten überträgt. Diese Übertragung erfolgt in einem oder mehreren sogenannten Bursts. Das Timing ist bezogen auf eine Systemzeit, die üblicherweise von der Zentralstation vorgegeben wird. Die Kenntnis des Timings ist besonders dann wichtig, wenn mehrere Endgeräte Daten an die Zentralstation übertragen, beispielsweise in unterschiedlichen Zeitschlitzen. Zur Analyse des Uplinks ist bisher somit eine sehr genaue Synchronisation mit der Systemzeit notwendig. Es ist die Aufgabe der vorliegenden Erfindung, diese exakte Synchronisierung überflüssig zu machen.

Diese Aufgabe wird gelöst durch das Verfahren und die Vorrichtung gemäß den unabhängigen Patentansprüchen. Vorteilhafte Ausgestaltungsformen sind in den abhängigen Patentansprüchen aufgeführt.

Die vorliegende Erfindung betrifft ein Verfahren zur Analyse einer Zweiwege-Kommunikation einer Zentralstation mit mindestens einem Endgerät. Ein erstes Empfangssignal enthält mindestens einen von einem Endgerät gesendeten Burst und ein zweites Empfangssignal ist das von der Zentralstation gesendete Signal. Das zweite Empfangssignal kann mit bekannten Mitteln empfangen, dekodiert und analysiert werden. Bei dem ersten Empfangssignal ist jedoch aus dem Signal an sich nicht ohne weiteres erkennbar, wann ein Burst beginnt und/oder von welchem Typ der Burst ist und von welchem Endgerät er stammt. Ist der Typ des Bursts bekannt, so ist auch die Länge des Bursts bekannt.

Das zweite Empfangssignal enthält Ressourcennutzungsinformationen, die einem Endgerät eine Ressource zuweisen. Ein Endgerät sendet einen Burst in einer von den Ressourcennutzungsinformationen definierten Ressource. Weiterhin ist eine endliche Menge von Bursttypen gegeben. Das bedeutet, dass ein Burst immer von einem Bursttyp aus dieser Menge ist. Im Falle eines DVB-RCS-Systems gibt es beispielsweise die vier Bursttypen ACQ, CSC, SYNC und TRF.

Der erste Schritt des erfindungsgemäßen Verfahrens besteht im Ermitteln eines Burstanfangs im überabgetasteten ersten Empfangssignal durch Korrelation mit einem Referenzsignal. Das Empfangssignal liegt, beispielsweise nach der Bearbeitung in einer Vorstufe, bevorzugt im Basisband oder einem Zwischenfrequenzband vor. Das erste Eingangssignal liegt in digitaler Form vor, ist also zeitdiskret abgetastet und üblicherweise wertdiskret quantisiert. Das Signal ist überabgetastet, die Abtastrate ist also größer als zur Repräsentation des Signals notwendig. Der Überabtastfaktor beträgt bevorzugt vier, die Überabtastrate ist also das Vierfache der Symbolrate, kann aber auch jeden anderen Wert annehmen.

In diesem ersten Schritt wird das überabgetastete erste Empfangssignal gleitend mit dem Referenzsignal korreliert. Das Referenzsignal ist ebenfalls ein zeitdiskretes Signal, bevorzugt mit derselben Abtastrate wie das überabgetastete erste Empfangssignal. Es stellt eine für einen Burst eines bestimmten Typs charakteristische Sequenz dar, deren Vorhandensein im überabgetasteten ersten Empfangssignal erwartet wird.

Bei der Korrelation wird beispielsweise jeder Abtastwert des Referenzsignals mit dem zugehörigen Abtastwert des ersten Empfangssignals multipliziert und über die Produkte summiert. Optional wird einer der Abtastwerte vor der Multiplikation konjugiert, da es sich dabei üblicherweise um komplexwertige Sequenzen handelt. Die Multiplikation und Summation wird für verschiedene zeitliche Verschiebungen des Referenzsignals gegenüber dem überabgetasteten ersten Empfangssignal wiederholt. Die Verschiebung, die zu der größten Summe führt, markiert die Startposition des Referenzsignals im überabgetasteten ersten Empfangssignal. Optional können sequentiell oder parallel mehrere Referenzsignale für eine Korrelation verwendet werden, was dann vorteilhaft ist, wenn Bursts verschiedenen Typs verschiedene charakteristische Sequenzen enthalten.

Der zweite Verfahrensschritt besteht aus dem Extrahieren eines Teilsignals aus dem überabgetasteten ersten Empfangssignal. Die Länge des Teilsignals entspricht mindestens der Länge des längsten auftretenden Bursts. Das Teilsignal beginnt bevorzugt an der Stelle des ersten Empfangssignals, an der das Referenzsignal beginnt. Optional enthält das Teilsignal einen oder mehrere Abtastwerte, auch als Sample bezeichnet, die unmittelbar vor der Startposition liegen, was für die anschließende Signalverarbeitung vorteilhaft sein kann. Das Teilsignal wird bevorzugt aus dem ersten Empfangssignal kopiert, entspricht also einem Teil des ersten Empfangssignals. Insgesamt enthält das Teilsignal also mindestens den kompletten Burst.

Der dritte Verfahrensschritt besteht aus dem Ermitteln des Bursttyps des Bursts durch Demodulation und Dekodierung des Teilsignals in Abhängigkeit von mindestens einer Bursttyphypothese. Die Bursthypothese ist die Annahme eines Bursttyps für den Burst. Jedem Bursttyp sind eine Burstlänge und Übertragungsparameter zugeordnet, die bei der Kodierung und/oder der Modulation der Information in den Burst verwendet werden. Diese sind üblicherweise für einen Bursttyp immer gleich, unabhängig davon, wann und von welchem Endgerät der Burst gesendet wurde. Mögliche Übertragungsparameter sind unter anderem die Symbolrate, die Coderate, die Punktierung oder das Modulationsverfahren. Die Übertragungsparameter für einen Bursttyp sind entweder bekannt oder werden von der Zentralstation im zweiten Empfangssignal übertragen.

Die Demodulation und die Dekodierung eines Empfangssignals anhand von Übertragungsparametern und der Burstlänge sind grundsätzlich bekannt. Die Erfindung nutzt die Information, ob die Demodulation und die Dekodierung erfolgreich waren, um die Bursttyphypothese zu bestätigen oder zu verwerfen und so den Bursttyp zu bestimmen. Diese Information wird ohnehin in vielen bekannten Demodulationsverfahren und Dekodierern ermittelt, beispielsweise zur Iterationskontrolle bei iterativer Verarbeitung. Nach dem dritten Verfahrensschritt sind somit der Startzeitpunkt des Bursts im ersten Empfangssignal und der Bursttyp bekannt. Mit diesen Informationen können die im Burst übertragenen Daten extrahiert und analysiert werden. Bei diesen Daten handelt es sich beispielsweise um eine ATM-Zelle (Asynchronous Transfer Mode) oder ein MPEG-Paket. Es können auch mehrere ATM-Zellen, MPEG-Pakete oder eine beliebige Kombination daraus in einem Burst enthalten sein.

Für den Fall, dass die Länge und die Übertragungsparameter für zwei verschiedene Bursttypen identisch sind, lässt sich aus der Information, ob die Demodulation und die Dekodierung erfolgreich waren, nicht eindeutig auf den Bursttyp schließen. Dann kann jedoch optional der Inhalt des Bursts analysiert werden, da die in dem Burst übertragenen Daten korrekt rekonstruiert wurden.

Das erfindungsgemäße Verfahren weist den großen Vorteil auf, dass keine exakte Synchronisation mit der Systemzeit des überwachten Kommunikationssystems notwendig ist, um einen Burst zu detektieren und zu analysieren. Die Signalverarbeitungskette bis einschließlich der Kanaldecodierung ist statisch konfigurierbar, ist also unabhängig von der dynamischen Signalisierung, in der eine Ressource einem Endgerät zugewiesen wird. Dies wird durch den Bursttyp-Hypothesentest sowie die Reihenfolge der Verfahrensschritte erreicht, die von der herkömmlichen Bearbeitungsreihenfolge in einem Endgerät abweicht.

Ein optionaler, aber bevorzugter vierter Verfahrensschritt ist das Zuordnen des Bursts zu einem von mehreren Endgeräten auf Basis der Ressourcennutzungsinformationen. Denn nach dem dritten Verfahrensschritt ist noch nicht bekannt, von welchem Endgerät der Burst gesendet wurde. In den Ressourcennutzungsinformationen wurde den Endgeräten mitgeteilt, welche Ressource sie für ihre Übertragung verwenden dürfen. Der Burst wird nun einem Endgerät zugeordnet, indem die Ressourcennutzungsinformationen mit dem Startzeitpunkt des Bursts verglichen werden. Diese müssen jedoch nicht exakt übereinstimmen. Für die Zuordnung ist es ausreichend, wenn der Betrag der zeitlichen Abweichung geringer ist als die Hälfte der Dauer des kürzesten auftretenden Bursts.

In einer bevorzugten Ausgestaltungsform der Erfindung ist das Referenzsignal ein überabgetastetes Präambelsignal, also eine zeitdiskrete Folge von Abtastwerten des Präambelsignals. Ein Präambelsignal ist ein einleitender Teil eines Bursts. Die Präambel wird anhand eines Schemas in das Präambelsignal kodiert und moduliert. Die Präambel oder das Präambelsignal ist entweder bekannt oder wird im zweiten Empfangssignal signalisiert. Die Präambel kann für jeden Bursttyp gleich oder prinzipiell von Typ zu Typ unterschiedlich sein. Das überabgetastete Präambelsignal ist somit eine charakteristische Sequenz, deren Vorhandensein im ersten Empfangssignal erwartet wird. Die Überabtastrate des Präambelsignals entspricht bevorzugt der Überabtastrate des ersten Empfangssignals.

Bevorzugt ist bei der Ermittlung des Bursttyps der ermittelte Bursttyp gleich der Bursttyphypothese, wenn eine Konvergenzmetrik der Demodulation und/oder der Dekodierung ein vorgegebenes Kriterium erfüllt. Wie vorstehend bereits erläutert wird das Teilsignal anhand der zu der Bursttyphypothese korrespondierenden Burstlänge und Übertragungsparameter demoduliert und dekodiert. Während dieses Vorgangs wird eine Konvergenzmetrik ermittelt, die angibt, ob der Vorgang konvergiert, also zu einem korrekten Ergebnis führt. Erfüllt diese Konvergenzmetrik ein vorgegebenes Kriterium, übersteigt es beispielsweise einen Grenzwert, so wird davon ausgegangen, dass die Bursttyphypothese korrekt ist, der Burst also vom angenommenen Typ ist.

Bevorzugt werden bei der Ermittlung des Bursttyps mehrere Bursttyphypothesen gleichzeitig oder sequentiell getestet. Das bedeutet, dass die Demodulation und die Dekodierung mit mehreren Bursttyphypothesen durchgeführt werden. Bei dem Test mehrerer Bursttyphypothesen wird beispielsweise der Bursttyp als vorliegend angesehen, dessen Hypothese die größte oder kleinste Konvergenzmetrik zur Folge hat. Optional muss die Konvergenzmetrik einen Mindestwert überschreiten oder unterschreiten, sonst werden die Demodulation und die Dekodierung als nicht erfolgreich und die Bursttyphypothese somit als falsch angesehen. Beim sequentiellen Test mehrerer Bursttyphypothesen wird alternativ der erste Bursttyp als vorliegend angesehen, dessen Hypothese zu einer Konvergenzmetrik führt, die über oder unter einem Schwellenwert liegt. Beim sequentiellen Test mehrerer Bursttyphypothesen werden die Hypothesen bevorzugt in absteigender Reihenfolge ihrer Auftrittswahrscheinlichkeit getestet. Dadurch wird der Rechenaufwand minimiert. Bei DVB-RCS als Beispiel ist die Auftrittswahrscheinlichkeit eines TRF-Bursts am höchsten und liegt oftmals bei 85% oder darüber, sodass in ca. 85% der Fälle nur eine Bursttyphypothese getestet werden muss.

In einer bevorzugten Ausgestaltungsform ist eine Ressource ein Zeitschlitz und optional zusätzlich ein Frequenzbereich. Ist die Ressource ein Zeitschlitz, so handelt es sich um ein TDMA-System (Time Division Multiple Access). Bestimmt die Ressource zusätzlich einen Frequenzbereich, so handelt es sich um ein MF-TDMA-System (Multi Frequency-Time Division Multiple Access). Die Zeitschlitze können, beispielsweise in einem sogenannten Frame, eine konstante oder variable Länge aufweisen.

Bevorzugt enthalten die Ressourcennutzungsinformationen eine Information über die Abfolge von Zeitschlitzen. Dies ist insbesondere dann vorteilhaft, wenn die Zeitschlitze eine variable Länge aufweisen. In einem DVB-RCS-System als Beispiel ist ein Frame in Zeitschlitze variabler Länge unterteilt. Die Unterteilung wird von der FCT (Frame Composition Table) repräsentiert. Mehrere Frames sind gemäß der SCT (Superframe Composition Table) in einem Superframe angeordnet. Die TCT (Timeslot Composition Table) legt fest, welche Übertragungsparameter in einem bestimmten Zeitschlitz zu verwenden sind.

In den Ressourcennutzungsinformationen, bei DVB-RCS in der FCT, wird die Abfolge der Zeitschlitze in einem Frame signalisiert, also festgelegt, wie lang die aufeinanderfolgenden Zeitschlitze in einem Frame sind. Optional wird in den Ressourcennutzungsinformationen, bei DVB-RCS in der TCT, ebenfalls festgelegt, welcher Bursttyp in einem Zeitschlitz gesendet werden darf. Die Ressourcennutzungsinformationen enthalten darüber hinaus bevorzugt eine Zuordnung mehrerer Endgeräte zu den Zeitschlitzen. Dies bedeutet die Zuteilung einer Ressource, also insbesondere eines Zeitschlitzes oder eines Zeitschlitzes und eines Frequenzbereichs, an ein Endgerät. Bei DVB-RCS erfolgt diese Zuordnung über den TBTP (Terminal Burst Time Plan).

In einer Ausgestaltungsform der Erfindung enthält das zweite Empfangssignal Systemzeitinformationen über die Systemzeit des Kommunikationssystems, über das die Zweiwege-Kommunikation durchgeführt wird. Diese Systemzeit wird üblicherweise von der Zentralstation festgelegt und ausgesendet, um die Endgeräte auf die Systemzeit zu synchronisieren. Bei DVB-RCS wird die Systemzeit als NCR (Network Clock Reference) bezeichnet und an alle Endgeräte gesendet. Die NCR besteht beispielsweise aus einem fortlaufenden Zähler.

Die Systemzeitinformationen und der Burst werden mit einem Zeitstempel versehen. Diese Zeitstempel können völlig unabhängig von der Systemzeit sein. Sie beruhen bevorzugt auf einer internen Uhr der Vorrichtung, mit der das Verfahren ausgeführt wird. Der Zeitstempel der Systemzeitinformationen stellt eine Beziehung zwischen der Systemzeit und der internen Uhr der Vorrichtung her, eine exakte Synchronisation ist jedoch nicht erforderlich. Aus den Ressourcennutzungsinformationen ist darüber hinaus bekannt, welchem Endgerät eine Ressource, insbesondere ein Zeitschlitz, zugeordnet ist. Diese Zuordnung ist mit Bezug auf die Systemzeit gegeben. Dann erfolgt bei der Analyse der Zweiwege-Kommunikation die Zuordnung des Bursts zu einem Endgerät auf Basis der Zeitstempel. Über den Zeitstempel des Bursts wird beispielsweise ein passender Zeitstempel der Systemzeitinformationen gesucht. Mit der diesem Zeitstempel zugeordneten Systemzeit wird aus den Ressourcennutzungsinformationen ermittelt, welchem Endgerät der Zeitschlitz zu dieser Systemzeit zugeordnet war. Optional wird, wenn kein zum Zeitstempel des Bursts korrespondierender Zeitstempel der Systemzeitinformationen vorhanden ist, eine Interpolation zwischen Zeitstempeln der Systemzeitinformationen und somit der Systemzeit durchgeführt.

Für die Zuordnung eines Zeitschlitzes, und damit eines darin gesendeten Bursts, zu einem Endgerät reicht es aus, wenn die über die Zuordnung der Zeitstempel bestimmte Systemzeit des Burstanfangs innerhalb des Zeitschlitzes liegt. Eine symbolgenaue Synchronisation zwischen der internen Uhr der Vorrichtung und der Systemzeit ist nicht erforderlich.

Bevorzugt erfolgt die Zweiwege-Kommunikation über einen Satelliten, beispielsweise in Form eines DVB-RCS-Systems. Die Kommunikation kann jedoch prinzipiell auch über andere Übertragungswege erfolgen, solange die Übertragung in eine der Richtungen einem TDMA-Schema oder einer Unterform wie MF-TDMA entspricht.

Das erfindungsgemäße Verfahren ist insbesondere ein Datenverarbeitungsverfahren. Dabei werden die einzelnen Verfahrensschritte von einer Recheneinheit, beispielsweise einem Computer, durchgeführt oder zumindest Befehle zur Durchführung eines oder mehrerer Verfahrensschritte erteilt, beispielsweise an externe Vorrichtungen oder andere Systemkomponenten. Die Erfindung betrifft weiterhin ein Computerprogramm, das, wenn es von einer Recheneinheit ausgeführt wird, diese dazu veranlasst, die einzelnen Verfahrensschritte auszuführen.

Die Erfindung betrifft weiterhin eine Vorrichtung, die dazu eingerichtet ist, das vorstehend beschriebene Verfahren durchzuführen. Die Vorrichtung weist insbesondere eine Recheneinheit auf, die die einzelnen Verfahrensschritte ausführt. Außerdem weist die Vorrichtung diejenigen Schnittstellen auf, die notwendig sind, um die zu verarbeitenden Daten und Signal zu empfangen und verarbeitete Daten oder Signale auszugeben. Bevorzugt weist die Vorrichtung eine interne Uhr auf. Die Vorrichtung ist ein passives Funkaufklärungssystem zur Zweiwege-Verkehrsanalyse.

Optional umfasst die Vorrichtung einen Empfänger für das erste Empfangssignal, einen Empfänger für das zweite Empfangssignal und eine Datenverbindung zwischen den beiden Empfängern. Optional sind die beiden Empfänger in unterschiedlichen Gehäusen angeordnet. Dies ist besonders vorteilhaft, wenn die Vorrichtung nicht an einem Ort platziert werden kann, an dem sowohl das erste als auch das zweite Empfangssignal empfangbar sind. Bei einer Satellitenkommunikation beispielsweise ist es möglich, dass sich die ausgeleuchteten Gebiete im Inbound Link und im Outbound Link nicht überschneiden oder dass die Vorrichtung nicht in einem Überschneidungsbereich platziert werden kann. Dann können die beiden Empfänger räumlich getrennt platziert werden, sodass jeder der Empfänger eines der Empfangssignale empfangen kann.

Die Vorrichtung weist Mittel zur Herstellung der Datenverbindung auf. Über die Datenverbindung tauschen die beiden Empfänger Daten aus. Bevorzugt ist die Recheneinheit, die die Verfahrensschritte ausführt, am Ort des Empfängers für das zweite Empfangssignal angeordnet. Dies ist vorteilhaft, da die Datenmenge, die von diesem Empfänger an die Recheneinheit übermittelt wird, größer ist als die vom Empfänger für das zweite Empfangssignal zu übertragende Datenmenge.
Optional enthält die Vorrichtung einen ersten GPS-Empfänger, der dem Empfänger für das erste Empfangssignal zugeordnet ist, und einen zweiten GPS-Empfänger, der dem Empfänger für das zweite Empfangssignal zugeordnet ist. Die Zuordnung ist sowohl logisch als auch räumlich, ein zugeordneter GPS-Empfänger befindet sich also am Ort des jeweiligen Empfängers für ein Empfangssignal. Über die GPS-Empfänger können die beiden Empfänger synchronisiert werden, wenn sie räumlich beabstandet sind. Die Synchronität der Empfänger ist insbesondere für die Ermittlung der Zeitstempel wichtig.
Es liegt im Rahmen der vorliegenden Erfindung, einzelne oder mehrere Merkmale verschiedener Ausgestaltungsformen miteinander zu kombinieren, solange dies technisch möglich ist. Darüber hinaus können einzelne Merkmale einer Ausgestaltungsform weggelassen werden, solange sie nicht erfindungswesentlich sind.

Die vorliegende Erfindung ist ausschließlich durch die angehängten Ansprüche definiert und wird nur durch deren Umfang limitiert. Alle im Folgenden diskutierten Ausgestaltungsformen, die nicht durch den Umfang der angehängten Ansprüche abgedeckt werden, sind als Beispiele anzusehen, die zum besseren Verständnis der vorliegenden Erfindung beitragen.

Die vorliegende Erfindung soll anhand eines Ausführungsbeispiels näher erläutert werden. Dabei zeigt:
- Figur 1: den prinzipiellen Aufbau einer satellitengestützten Zweiwege- Kommunikation,
- Figur 2: einen ersten Teil einer erfindungsgemäßen Vorrichtung,
- Figur 3: die räumliche Verteilung einer erfindungsgemäßen Vorrichtung,
- Figur 4: einen beispielhaften Aufbau eines Frames,
- Figur 5: eine beispielhafte Zuordnung von Zeitschlitzen zu Endgeräten,

- Figur 6: eine schematische Darstellung der Ermittlung eines Burstanfangs und
- Figur 7: die Zuordnung eines Bursts zu einem Endgerät.

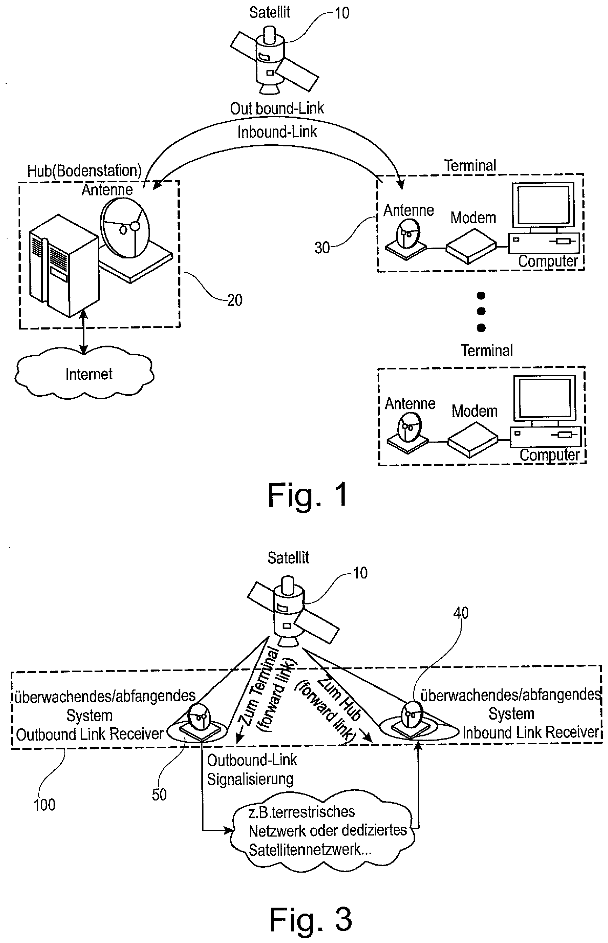

Die Figur 1 zeigt schematisch den Aufbau einer satellitengestützten Zweiwege-Kommunikation am Beispiel von DVB-RCS (Digital Video Broadcast - Return Channel Satellite). Dabei kommuniziert eine Zentralstation 20, auch als Bodenstation oder Hub bezeichnet, über einen Satelliten 10 mit Endgeräten 30, die auch als Terminal bezeichnet werden. Die Übertragung von der Zentralstation 20 zu den Endgeräten 30 wird als Outbound Link bezeichnet, die Übertragung in umgekehrter Richtung als Inbound Link.

Die Zentralstation 20 weist beispielhaft einen Rechner auf, der mit dem Internet und einer Antenne verbunden ist. Ein Endgerät 30 besteht beispielhaft aus einer Antenne, die über ein Modem mit einem Computer verbunden ist. Über die Antennen und den Satelliten 10 tauschen die Zentralstation 20 und die Endgeräte 30 Daten aus. Die Struktur und die Übertragungsparameter der Datenübertragung im Outbound Link sind bekannt. Es handelt sich beispielsweise um einen TDM-Broadcastkanal (Time Division Multiplexing).

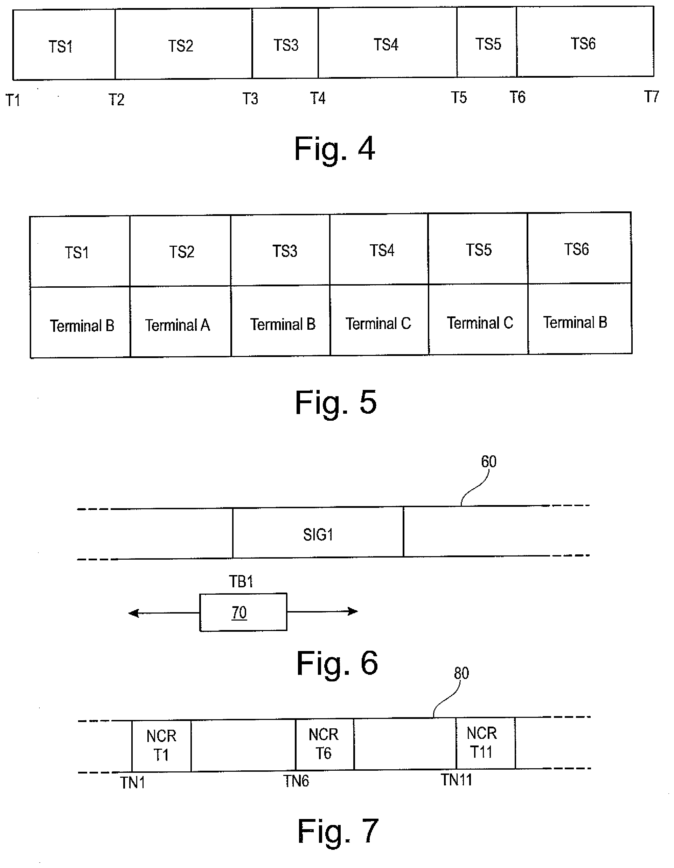

Die Datenübertragung im Inbound Link erfolgt über TDMA (Time Division Multiple Access) oder MF-TDMA (Multi Frequency-Time Division Multiple Access). Dies bedeutet, dass ein Endgerät 30 die Daten in sogenannten Bursts überträgt. Ein Burst besteht aus einer Präambel und Nutzdaten. Jeder Burst ist von einem bestimmten Typ, wobei die Menge der möglichen Bursttypen endlich und abgeschlossen ist. Bei DVB-RCS beispielsweise können die Bursttypen TRF, ACQ, CSC und SYNC auftreten. Die Nutzdaten sind beispielsweise ATM-Zellen oder MPEG-Pakete. Im Inbound Link nutzen die Endegeräte 30 gemeinsam ein Frequenzband, welches wiederum in mehrere Subbänder, auch als Subkanäle oder Frequenzbereiche bezeichnet, unterteilt werden kann. Die Datenübertragung ist in Superframes strukturiert, die in Frames unterteilt sind, die wiederum in Zeitschlitze unterteilt sind. Ein Zeitschlitz, optional zusätzlich in Kombination mit einem Frequenzbereich, wird als Ressource bezeichnet. Die Zentralstation 20 koordiniert, welches Endgerät 30 welche Ressource verwenden darf. Die Figur 4 zeigt einen beispielhaften Aufbau eines Frames. Der Frame ist in die Zeitschlitze TS1 bis TS6 unterteilt, wobei jeder Zeitschlitz eine gewisse Länge aufweist.

Der Startzeitpunkt eines Zeitschlitzes ist auf die Systemzeit bezogen, die von der Zentralstation 20 festgelegt und regelmäßig im Outbound Link übertragen wird. Bei DVB-RCS wird die Systemzeit als NCR (Network Clock Reference) bezeichnet. Der Zeitschlitz TS1 erstreckt sich vom Systemzeitpunkt T1 bis zum Systemzeitpunkt T2, der Zeitschlitz TS2 vom Systemzeitpunkt T2 bis zum Systemzeitpunkt T3, der Zeitschlitz TS3 vom Systemzeitpunkt T3 bis zum Systemzeitpunkt T4, der Zeitschlitz TS4 vom Systemzeitpunkt T4 bis zum Systemzeitpunkt T5, der Zeitschlitz TS5 vom Systemzeitpunkt T5 bis zum Systemzeitpunkt T6, und der Zeitschlitz TS6 vom Systemzeitpunkt T6 bis zum Systemzeitpunkt T7. Eine beispielhafte Zuordnung der Zeitschlitze zu drei Endgeräten zeigt die Tabelle in der Figur 5.

Den Aufbau der Superframes und der Frames signalisiert die Zentralstation in der SCT (Superframe Composition Table) und der FCT (Frame Composition Table). Den Aufbau eines Zeitschlitzes, also insbesondere die Übertragungsparameter wie Symbolrate, Coderate oder Modulationsverfahren, signalisiert die Zentralstation in der TCT (Timeslot Composition Table). Welcher Zeitschlitz welchem Endgerät zugeordnet ist, signalisiert die Zentralstation 20 in dem TBTP (Terminal Burst Time Plan). Die prinzipielle Struktur der Ressource, wie sie in der SCT, der FCT und der TCT festgelegt ist, ist zeitinvariant und unabhängig von der Zuweisung der Ressource an ein Endgerät und wird daher als quasi-statische Signalisierung bezeichnet. Die Zuordnung der Ressourcen zu den Endgeräten in dem TBTP wird als dynamische Signalisierung bezeichnet. Im TBTP werden die Zeitschlitze, Frames und Superframes über ein geeignetes Nummerierungsschema adressiert.

Die Figur 3 zeigt schematisch eine erfindungsgemäße Analysevorrichtung 100 zur passiven Analyse der Zweiwege-Kommunikation über den Satelliten 10. Die Vorrichtung 100 umfasst einen Inbound Link Receiver 40 zum Empfang und zur Verarbeitung eines ersten Empfangssignals, das von den Endgeräten 30 ausgesendet wird und mindestens einen von einem Endgerät 30 gesendeten Burst enthält, und einen Outbound Link Receiver 50 zum Empfang und zur Verarbeitung eines zweiten Empfangssignals, das im Wesentlichen dem von der Zentralstation 20 ausgesendeten Signal entspricht. Die beidem Empfänger 40 und 50 sind so angeordnet, dass sie das jeweilige Empfangssignal empfangen können. Der Outbound Link Receiver 50 ermittelt die SCT, die FCT, die TCT, den TBTP und die NCR aus dem zweiten Empfangssignal und überträgt sie über eine Signalisierungsleitung an den Inbound Link Receiver 40. Dieser weist eine in den Figuren nicht dargestellte Speichereinrichtung auf, in der die über die Signalisierungsleitung empfangenen Daten zwischengespeichert werden können. Das zweite Empfangssignal enthält alle Informationen, die zu seiner Analyse erforderlich sind.

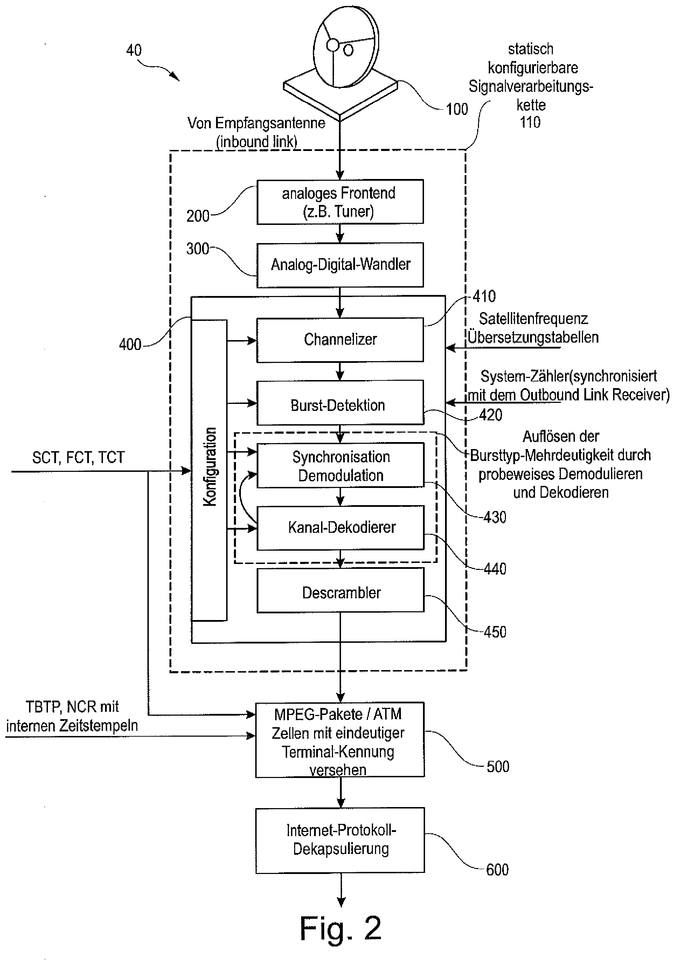

Die Figur 2 zeigt schematisch die Struktur des Inbound Link Receivers 40. Über die Antenne 100 empfängt der Receiver 40 das erste Empfangssignal. Das von der Antenne 100 empfangene Empfangssignal wird in der Signalverarbeitungskette 110 weiterverarbeitet. Im Folgenden wird nur die Verarbeitung des ersten Empfangssignals im Inbound Link Receiver 40 beschrieben, da die Verarbeitung und Auswertung des zweiten Empfangssignals im Outbound Link Receiver 50 prinzipiell bekannt ist.

Ein analoges Hochfrequenzsignal wird zunächst vom Mischer 200 in das Basisband heruntergemischt und vom Analog-Digital-Wandler 300 in ein digitales, also zeit- und wertdiskretes, Abtastsignal umgewandelt. Das Abtastsignal ist bevorzugt überabgetastet, weist also eine Abtastrate auf, die größer ist als zur Repräsentation des Basisbandsignals notwendig wäre. Das Signal wird dann dem Detektionsblock 400 zugeführt.

Im Channelizer-Block 410 wird das vom Analog-Digital-Wandler 300 bereitgestellte Signal einer Abtastratenwandlung und optional einer Mehrkanalfilterung unterzogen, um einzelne Subkanäle zu extrahieren, wenn die Endgeräte 30 in mehreren Frequenzbereichen senden können. Das Ergebnis ist ein überabgetastetes erstes Empfangssignal in Form einer Sequenz von Abtastwerten oder Samples.

Im Burst-Detection-Block 420 wird der Anfang eines Bursts im überabgetasteten ersten Empfangssignal durch Korrelation mit einem Referenzsignal ermittelt. Das Referenzsignal entspricht einem überabgetasteten Präambelsignal. Das Präambelsignal ist dasjenige Signal, das beim Empfang einer Präambel im ersten Empfangssignal auftreten würde. Das Präambelsignal ist dem Inbound Link Receiver 40 bekannt, wenn die Präambel und die Übertragungsparameter für die Präambel bekannt sind. Diese sind entweder durch das Kommunikationssystem vorgegeben oder werden von der Zentralstation 20 signalisiert.

Die Figur 6 zeigt schematisch die Ermittlung des Burstanfangs. Das überabgetastete erste Empfangssignal ist mit dem Bezugszeichen 60 bezeichnet, das Referenzsignal mit dem Bezugszeichen 70. Das Referenzsignal wird, wie durch die Pfeile angedeutet, gleitend mit dem ersten Empfangssignal korreliert. Dabei werden beispielsweise die Abtastwerte des ersten Empfangssignals 60 und des konjugierten Referenzsignals 70 paarweise multipliziert und die Produkte aufsummiert. Dann wird das Referenzsignal gegenüber dem ersten Empfangssignal verschoben, beispielsweise um den zeitlichen Abstand zwischen zwei Abtastzeitpunkten, und wieder die Summe über die paarweisen Produkte der Abtastwerte berechnet. Dies wird wiederholt, bis die Summe, und damit die Korrelation zwischen dem ersten Empfangssignal und dem Referenzsignal, einen festgelegten Grenzwert überschreitet oder eine andere Abbruchbedingung vorliegt. War die Korrelation erfolgreich, dann markiert die zeitliche Relativposition zwischen dem Referenzsignal 70 und dem überabgetasteten ersten Empfangssignal 60 den Burstanfang. Dieser wird mit einem Zeitstempel TB1 versehen, der auf einer internen Uhr der Vorrichtung 100 basiert.

Die Ermittlung des Burstanfangs ist bezüglich des Timings der Superframes, Frames und Zeitschlitze in der Systemzeit des Kommunikationssystems freilaufend, setzt also die Kenntnis der Systemzeit nicht voraus. Weist jeder Bursttyp dieselbe Präambel auf, so reicht die Korrelation mit einem Referenzsignal aus. Haben mehrere Bursttypen unterschiedliche Präambeln, so muss gegebenenfalls die Korrelation mit verschiedenen Referenzsignalen durchgeführt werden, um den Burstanfang zu bestimmen.

In einem zweiten Schritt ermittelt der Inbound Link Receiver 40, von welchem Bursttyp der Burst ist. Dazu wird aus dem überabgetasteten ersten Empfangssignal ein Teilsignal SIG übernommen, das am Burstanfang beginnt und mindestens so lang ist wie der längstmögliche Burst. Zur Ermittlung des Bursttyps wird das Teilsignal SIG im Demodulation-Block 430 und im Channel-Decoder-Block 440 unter Verwendung mindestens einer Bursttyphypothese anhand eines Demodulations- und Dekodierschemas demoduliert und dekodiert. Eine Bursttyphypothese repräsentiert die Annahme, dass ein Burst eines bestimmten Bursttyps mit einer zugehörigen Burstlänge und zugehörigen Übertragungsparametern vorliegt. Die Burstlänge und insbesondere die Übertragungsparameter sind für jeden Bursttyp entweder vorbekannt oder werden von der Zentralstation im zweiten Empfangssignal signalisiert. Im zweiten Fall sind die Übertragungsparameter üblicherweise in der quasistatischen Signalisierung, insbesondere in der TCT, der FCT, der SCT oder einer Kombination daraus, enthalten.

Bei der Demodulation und der Dekodierung auf Basis der angenommenen Burstlänge und der angenommenen Übertragungsparameter wird ein Wahrscheinlichkeitsmaß berechnet, das die Wahrscheinlichkeit der korrekten Demodulation und Dekodierung repräsentiert. Dieses Wahrscheinlichkeitsmaß wird bei diesem Prozess ohnehin zur internen Evaluierung bestimmt und erfindungsgemäß zur Validierung der Bursttyphypothese herangezogen. Das Wahrscheinlichkeitsmaß ist üblicherweise eine Metrik für die Konvergenz des Demodulations- und Dekodierprozesses. Liegt diese Metrik über oder unter einem Grenzwert, so wird angenommen, dass die Bursttyphypothese korrekt war und der Burst vom angenommenen Typ ist. Insbesondere bei einer Kommunikation über einen Satelliten ist die Verbindung quasi fehlerfrei, sodass die Konvergenzwahrscheinlichkeit bei der Demodulation und Dekodierung sehr hoch ist, wenn die Bursttyphypothese und der tatsächliche Bursttyp übereinstimmen.

In diesem Ausführungsbeispiel werden die Bursttyphypothesen iterativ ausgewählt und getestet. Die Testreihenfolge ergibt sich aus der fallenden Auftrittswahrscheinlichkeit der Bursttypen. Da bei DVB-RCS der TRF-Bursttyp in der Regel die höchste Auftrittswahrscheinlichkeit aufweist (häufig größer 85%), wird zuerst auf diesen Bursttyp getestet. Die Auftrittswahrscheinlichkeiten können z.B. bei DVB-RCS aus der quasistatischen Signalisierung (SCT/FCT/TCT) der Zentralstation 20 berechnet werden. Die erste Bursttyphypothese, für die die Konvergenzmetrik über oder unter einem Schwellenwert liegt, wird als korrekt angenommen.

Die Komponenten Channelizer-Block 410, Burst-Detection-Block 420, Demodulation-Block 430 und Channel-Decoder-Block 440 werden vom Configuration-Block 460 konfiguriert. Der Configuration-Block empfängt die quasi-statische Signalisierung in Form von SCT, FCT und TCT von dem Outbound Link Receiver 50 und ermittelt daraus beispielsweise die Übertragungsparameter der Präambel, die Bursttyphypothesen oder die Auftrittswahrscheinlichkeiten der Bursttypen. Bevorzugt steuert der Configuration-Block 460 auch die Testsequenz der Bursttyphypothesen. Jeder der Blöcke 410 bis 460 kann in Hardware oder Software realisiert sein. Der Detektionsblock 400 kann vollständig von der dynamischen Signalisierung der Zentralstation 20 beziehungsweise von der Systemzeit entkoppelt sein.

Ist der Bursttyp korrekt identifiziert, so bedeutet dies gleichzeitig, dass die Nutzdaten in dem Burst korrekt rekonstruiert wurden. Im Descrambler-Block 450 werden bei Bedarf die Daten aus der Kanaldecodierung mit einer vorgegebenen Pseudorauschsequenz modulo-2-addiert (bzw. multipliziert bei +/-1 Darstellung), um den Einfluss des sendeseitigen Scramblers aufzuheben.

Der Burstzuordnungsblock 500 dient der Zuordnung des Bursts zu einem Endgerät 30. Im einfachsten Fall lässt sich das den Burst sendende Endgerät aus den Nutzdaten identifizieren, beispielsweise anhand eines Headers in den Nutzdaten. Alternativ erfolgt die Zuordnung über die quasi-statische und die dynamische Signalisierung. Dabei wird davon ausgegangen, dass die Zentralstation 20 regelmäßig die NCR überträgt. Im Outbound Link Receiver 50 wird jede Übertragung der NCR erfasst und die NCR zusammen mit einem Zeitstempel gespeichert. In der Figur 7 ist beispielhaft ein Teil des zweiten Empfangssignals 80 dargestellt, in dem regelmäßig eine NCR übertragen wird. Die drei beispielhaften NCRs T1, T6 und T11 sind mit dem Zeitstempeln TN1, TN6 und TN11 versehen. Der Burstzuordnungsblock 500 vergleicht den Zeitstempel TB1 des Bursts mit den Zeitstempeln der NCRs und stellt beispielsweise fest, dass der Zeitstempel TN1 dem Zeitstempel TB1 entspricht oder zumindest innerhalb des Zeitschlitzes TS1 liegt. Somit ist bekannt, dass der Burst zum Systemzeitpunkt T1, also im Zeitschlitz TS1, gesendet wurde. Aus dem TBTP, wie er in der Tabelle in der Figur 5 dargestellt ist, ermittelt der Burstzuordnungsblock 500 nun, dass der Burst vom Terminal B gesendet wurde.

Im Dekapsulierungsblock 600 werden bei Bedarf die einem Endgerät 30 zugeordneten Nutzdaten dekapsuliert und alle weiteren Protokollverarbeitungsschritte durchgeführt.

In einer Alternative zu der Konfiguration in Figur 3 überträgt der Inbound Link Receiver 40 die Ausgangsdaten nach der Kanaldecodierung und dem Descrambling mit einem Header, der beispielsweise den Zeitstempel und/oder eine Information über die Empfangsfrequenz enthält, zur Weiterverarbeitung an den Outbound Link Receiver 50. Dieser bestimmt die zu den Daten korrespondierenden Quellen (Endgeräte) anhand der Outbound-Signalisierung.

Die vorliegende Erfindung ist nicht auf DVB-RCS beschränkt, sondern kann prinzipiell zur Analyse jeder Zweiwege-Kommunikation, insbesondere über eine Satellitenverbindung, verwendet werden, wenn die Datenübertragung in einer Richtung auf TDMA mit dynamischer Ressourcenzuweisung oder einer Unterform davon basiert und die Ressourcennutzungsinformation in der Datenübertragung in die andere Richtung übermittelt wird.

## Patentansprüche

1. Verfahren zur Analyse einer Zweiwege-Kommunikation einer Zentralstation (20) mit mindestens einem Endgerät (30), wobei ein erstes Empfangssignal (60) mindestens einen von einem Endgerät (30) gesendeten Burst enthält und ein zweites Empfangssignal (80) das von der Zentralstation (20) gesendete Signal ist, das zweite Empfangssignal (80) Ressourcennutzungsinformationen enthält, ein Endgerät (30) einen Burst in einer von den Ressourcennutzungsinformationen definierten Ressource sendet und eine endliche Menge von Bursttypen gegeben ist, **gekennzeichnet durch** die Verfahrensschritte
a) Ermitteln eines Burstanfangs im überabgetasteten ersten Empfangssignal (60) durch Korrelation mit einem Referenzsignal (70),
b) Extrahieren eines Teilsignals (SIG) aus dem überabgetasteten ersten Empfangssignal (60), wobei die Länge des Teilsignals (SIG) mindestens der Länge des längsten auftretenden Bursts entspricht,
und
c) Ermitteln des Bursttyps des Bursts durch Demodulation und Dekodierung des Teilsignals (SIG) in Abhängigkeit von mindestens einer Bursttyphypothese.

2. Verfahren nach Anspruch 1, **gekennzeichnet durch** den Verfahrensschritt
d) Zuordnen des Bursts zu einem von mehreren Endgeräten (30) auf Basis der Ressourcennutzungsinformationen.

3. Verfahren nach einem der Ansprüche 1 oder 2, wobei das Referenzsignal (70) ein überabgetastetes Präambelsignal ist.

4. Verfahren nach einem der Ansprüche 1 bis 3, **dadurch gekennzeichnet, dass** bei der Ermittlung des Bursttyps der ermittelte Bursttyp gleich der Bursttyphypothese ist, wenn eine Konvergenzmetrik der Demodulierung und/oder Dekodierung ein vorgegebenes Kriterium erfüllt.

5. Verfahren nach einem der Ansprüche 1 bis 4, **dadurch gekennzeichnet, dass** bei der Ermittlung des Bursttyps mehrere Bursttyphypothesen gleichzeitig oder sequentiell getestet werden.

6. Verfahren nach einem der Ansprüche 1 bis 5, **dadurch gekennzeichnet, dass** eine Ressource ein Zeitschlitz und optional zusätzlich ein Frequenzbereich ist.

7. Verfahren nach Anspruch 6, **dadurch gekennzeichnet, dass** die Ressourcennutzungsinformationen eine Information über die Abfolge von Zeitschlitzen enthalten.

8. Verfahren nach Anspruch 6 oder 7, **dadurch gekennzeichnet, dass** die Ressourcennutzungsinformationen eine Zuordnung mehrerer Endgeräte (30) zu den Zeitschlitzen enthalten.

9. Verfahren nach einem der Ansprüche 1 bis 8, **dadurch gekennzeichnet, dass** das zweite Empfangssignal (80) Systemzeitinformationen über die Systemzeit des Kommunikationssystems enthält, welche die Zweiwege-Kommunikation durchführt, die Systemzeitinformationen mit einem Zeitstempel (TN1, TN2, TN3) versehen werden, der Burst mit einem Zeitstempel (TB1) versehen wird und die Zuordnung des Bursts zu einem Endgerät auf Basis der Zeitstempel (TN1, TN2, TN3, TB1) erfolgt.

10. Verfahren nach einem der Ansprüche 1 bis 9, **dadurch gekennzeichnet, dass** die Zweiwege-Kommunikation über einen Satelliten (10) erfolgt.

11. Computerprogramm, das dazu eingerichtet ist, eine Recheneinheit dazu zu veranlassen, die Verfahrensschritte des Verfahrens nach einem der Ansprüche 1 bis 10 auszuführen.

12. Vorrichtung (100), die dazu eingerichtet ist, das Verfahren nach einem der Ansprüche 1 bis 10 durchzuführen.

13. Vorrichtung (100) nach Anspruch 12, **gekennzeichnet durch** einen Empfänger (40) für das erste Empfangssignal (60), einen Empfänger (50) für das zweite Empfangssignal (80) und eine Datenverbindung zwischen den beiden Empfängern.

14. Vorrichtung (100) nach Anspruch 12 oder 13, **gekennzeichnet durch** einen ersten GPS-Empfänger, der dem Empfänger (40) für das erste Empfangssignal (60) zugeordnet ist, und einen zweiten GPS-Empfänger, der dem Empfänger (50) für das zweite Empfangssignal (80) zugeordnet ist.

## Claims

1. Method for analysing two-way communication by a central station (20) with at least one terminal (30), wherein a first received signal (60) contains at least one burst sent by a terminal (30) and a second received signal (80) is the signal sent by the central station (20), the second received signal (80) contains resource use information, a terminal (30) sends a burst in a resource defined by the resource use information and there is a finite set of burst types, **characterized by** the method steps of
a) ascertaining a burst start in the oversampled first received signal (60) by correlation with a reference signal (70),
b) extracting a partial signal (SIG) from the oversampled first received signal (60), the length of the partial signal (SIG) being consistent at least with the length of the longest occurring burst, and
c) ascertaining the burst type of the burst by demodulation and decoding of the partial signal (SIG) on the basis of at least one burst type hypothesis.

2. Method according to Claim 1, **characterized by** the method step of
d) assigning the burst to one of multiple terminals (30) on the basis of the resource use information.

3. Method according to either of Claims 1 and 2, wherein the reference signal (70) is an oversampled preamble signal.

4. Method according to one of Claims 1 to 3, **characterized in that** during the ascertainment of the burst type the ascertained burst type is the same as the burst type hypothesis if a convergence metric of the demodulation and/or decoding satisfies a prescribed criterion.

5. Method according to one of Claims 1 to 4, **characterized in that** during the ascertainment of the burst type multiple burst type hypotheses are tested at the same time or sequentially.

6. Method according to one of Claims 1 to 5, **characterized in that** a resource is a time slot and optionally additionally a frequency range.

7. Method according to Claim 6, **characterized in that** the resource use information contains a piece of information about the sequence of time slots.

8. Method according to Claim 6 or 7, **characterized in that** the resource use information contains an assignment of multiple terminals (30) to the time slots.

9. Method according to one of Claims 1 to 8, **characterized in that** the second received signal (80) contains system time information about the system time of the communication system that performs the two-way communication, the system time information is provided with a time stamp (TN1, TN2, TN3), the burst is provided with a time stamp (TB1) and the assignment of the burst to a terminal is made on the basis of the time stamps (TN1, TN2, TN3, TB1).

10. Method according to one of Claims 1 to 9, **characterized in that** the two-way communication is effected via a satellite (10).

11. Computer program that is set up to prompt a computation unit to perform the method steps of the method according to one of Claims 1 to 10.

12. Apparatus (100) that is set up to perform the method according to one of Claims 1 to 10.

13. Apparatus (100) according to Claim 12, **characterized by** a receiver (40) for the first received signal (60), a receiver (50) for the second received signal (80) and a data connection between the two receivers.

14. Apparatus (100) according to Claim 12 or 13, **characterized by** a first GPS receiver, assigned to the receiver (40) for the first received signal (60), and a second GPS receiver, assigned to the receiver (50) for the second received signal (80).

## Revendications

1. Procédé destiné à analyser une communication bidirectionnelle d'un poste central (20) avec au moins un terminal (30), sachant qu'un signal de réception (60) contient au moins une rafale envoyée par un terminal (30) et un deuxième signal de réception (80) est le signal envoyé par le poste central (20), le deuxième signal de réception (80) contient des informations d'utilisation de ressources, un terminal (30) envoie une rafale dans une ressource définie par les informations d'utilisation de ressources et une quantité finale de types de rafales est donnée, **caractérisé par** les étapes de procédé :
a) de la détermination d'un début de rafale dans le premier signal de réception (60) suréchantillonné, par corrélation avec un signal de référence (70),
b) de l'extraction d'un signal partiel (SIG) à partir du premier signal de réception (60) suréchantillonné, la longueur du signal partiel (SIG) correspondant à la longueur de la plus longue rafale qui se produit et
c) de la détermination du type de rafale de la rafale par démodulation et décodage du signal partiel (SIG) en fonction d'au moins une hypothèse de type de rafale.

2. Procédé selon la revendication 1, **caractérisé par** l'étape de procédé :
d) de l'association de la rafale à un ou plusieurs types de rafale (30) sur la base des informations d'utilisation de ressources.

3. Procédé selon l'une quelconque des revendications 1 ou 2, le signal de référence (70) étant un signal de préambule suréchantillonné.

4. Procédé selon l'une quelconque des revendications 1 à 3, **caractérisé en ce que** lors de la détermination du type de rafale, le type de rafale déterminé est identique à l'hypothèse du type de rafale si une métrique de convergence de la démodulation et/ou du décodage satisfait à un critère prédéfini.

5. Procédé selon l'une quelconque des revendications 1 à 4, **caractérisé en ce que** lors de la détermination du type de rafale, plusieurs hypothèses de types de rafale sont testées simultanément ou séquentiellement.

6. Procédé selon l'une quelconque des revendications 1 à 5, **caractérisé en ce qu'**une ressource est un créneau temporel et en option également une gamme de fréquences.

7. Procédé selon la revendication 6, **caractérisé en ce que** les informations d'utilisation de ressources contiennent une information sur la succession des créneaux temporels.

8. Procédé selon la revendication 6 ou 7, **caractérisé en ce que** les informations d'utilisation de ressources contiennent une association de plusieurs terminaux (30) aux créneaux temporels.

9. Procédé selon l'une quelconque des revendications 1 à 8, **caractérisé en ce que** le deuxième signal de réception (80) contient des informations de temps de système sur le temps de système du système de communication que réalise la communication bidirectionnelle, les informations de temps de système sont munies d'un horodateur (TN1, TN2, TN3), la rafale est munie d'un horodateur (TB1) et l'association de la rafale à un terminal s'effectue sur la base des horodateurs (TN1, TN2, TN3, TB1).

10. Procédé selon l'une quelconque des revendications 1 à 9, **caractérisé en ce que** la communication bidirectionnelle s'effectue via un satellite (10).

11. Programme informatique qui est aménagé pour inciter une unité de calcul à réaliser les étapes de procédé selon l'une quelconque des revendications 1 à 10.

12. Dispositif (100), qui est aménagé pour réaliser le procédé selon l'une quelconque des revendications 1 à 10.

13. Dispositif (100) selon la revendication 12, **caractérisé par** un récepteur (40) pour le premier signal de réception (60), un récepteur (50) pour le deuxième signal de réception (80) et une connexion de données entre les deux récepteurs.

14. Dispositif (100) selon la revendication 12 ou 13, **caractérisé par** un premier récepteur GPS qui est associé au récepteur (40) du premier signal de réception (60) et un deuxième récepteur GPS qui est associé au récepteur (50) du deuxième signal de réception (80).
